# EUROPÄISCHE PATENTSCHRIFT

(11) **EP 2 234 081 B1**
(45) Veröffentlichungstag und Bekanntmachung des Hinweises auf die Patenterteilung: **14.12.2016**
(21) Anmeldenummer: 10157441.6
(22) Anmeldetag: 23.03.2010
(51) Int. Cl.: G01S 13/91, G08G 1/054, G01S 7/40, G01S 7/497, G01S 17/02, G01S 13/86, G01S 17/89, G08G 1/017

(54) **Verfahren zur Herstellung einer bekannten festen räumlichen Beziehung zwischen einem Laserscanner und einer Digitalkamera zur Verkehrsüberwachung**
Method for producing a known fixed spatial relationship between a laser scanner and a digital camera for traffic monitoring
Systèmes et procédés pour allouer et transmettre des transmissions de blocs de données en liaison ascendante

(30) Priorität: 24.03.2009 DE 102009013667
(43) Veröffentlichungstag der Anmeldung: 29.09.2010
(73) Patentinhaber: JENOPTIK Robot GmbH, 40789 Monheim am Rhein (DE)
(72) Erfinder: Lehning, Michael Dr., 31137 Hildesheim (DE)
(74) Vertreter: Schaller, Renate

(56) Entgegenhaltungen:
- EP-A1- 1 990 655
- EP-A1- 2 157 558
- EP-A2- 1 760 491
- WO-A1-01/71647
- DE-A1- 10 154 861

## Beschreibung

Insbesondere aus der Verkehrsmesstechnik sind Verfahren und Vorrichtungen bekannt, mit denen mittels eines Laserscanners ein Bereich einer Fahrbahn auf ein Ereignis hin überwacht wird und im Falle des Eintretens des Ereignisses mittels einer Digitalkamera eine fotografische Aufnahme erstellt wird.
Das Ereignis kann z. B. ein Fahrzeug sein, das mit einer überhöhten Geschwindigkeit im Vergleich zu einer vorgegebenen Grenzgeschwindigkeit den Überwachungsbereich durchfährt. Das Ereignis könnte auch ein Fahrzeug sein, das auf einer für den betreffenden Fahrzeugtyp nicht zugelassenen Spur fährt, oder in den Überwachungsbereich in einem unzulässigen Zeitfenster, z. B. während der Rotphase einer Verkehrsampel einfährt.

Damit derartige Geräte für den bestimmungsgemäßen Gebrauch zugelassen werden, muss einerseits sichergestellt und plausibel gemacht werden, dass die Messwerte des Laserscanners korrekt sind und andererseits müssen die Messwerte dem angemessenen Fahrzeug zweifelsfrei zugeordnet werden können.

Die DE 10 2009 007 055.9 betrifft ein Verfahren, welches das Problem der zweifelsfreien Zuordnung löst, insbesondere der Zuordnung einer gemessenen Geschwindigkeit eines Fahrzeuges zu einem in einem Bilddokument abgebildeten Fahrzeug.

Bei einem Verfahren gemäß der DE 10 2009 007 055.9 wird ein Messstrahl über einen vorgegebenen Messwinkelbereich horizontal über eine Fahrbahn gescannt, sodass Fahrzeuge beim Durchfahren der sich ausbildenden Scanebene Messwerte generieren, aus denen die Geschwindigkeit der Fahrzeuge und die zeitliche Änderung der Position ermittelt werden kann.

Der Messstrahl ist ein gepulster Laserstrahl, der die horizontale Scanebene mit einer konstanten, vorgegebenen Scanfrequenz und einer konstanten, vorgegebenen Pulsfrequenz mehrfach abscannt. Dazu ist ein Laserscanner neben der Fahrbahn in einem spitzen Winkel zur Fahrbahnrichtung aufgestellt.

Während des Scannens trifft der Laserstrahl auf sich im Messwinkelbereich befindende Fahrzeuge und wird reflektiert. Der jeweilige Auftreffpunkt wird jeweils durch einen Messpunkt Pₙ beschrieben.

Die Laufzeit des gepulsten Laserstrahls (Impulslaufzeit) zum angemessenen Fahrzeug und zurück korreliert mit der zurückgelegten Wegstrecke, woraus die Entfernung eₙ eines Messpunktes Pₙ vom am Fahrbahnrand positionierten Laserscanner abgeleitet und einem Zeitpunkt tₙ sowie einem momentanen Scanwinkel εₙ zugeordnet werden kann.

Mit den Messwerten für die Entfernung eₙ, dem momentanen Scanwinkel εₙ und dem Zeitpunkt tₙ, können die Messpunkte Pₙ mit zeitlicher Zuordnung in einem Polarkoordinatensystem (Scannerkoordinatensystem) beschrieben werden, das durch den Standort und die Ausrichtung des Laserscanners bestimmt ist.

Nachdem aus den Messwerten die Geschwindigkeit des angemessenen Fahrzeuges bestimmt wurde, wird diese mit einer vorgegebenen Grenzgeschwindigkeit verglichen und im Falle der Überschreitung wird eine Digitalkamera ausgelöst, um eine elektronische Aufnahme zu erstellen, sobald sich dieses Fahrzeug in einer vorgegebenen Entfernung zur Digitalkamera, der Fotoentfernung e_{foto}, befindet. Die elektronische Aufnahme wird abgespeichert, sodass jederzeit ein Beweisfoto ausgedruckt werden kann.

Die Digitalkamera ist über eine Steuer- und Auswerteeinheit mit dem Laserscanner verbunden und ist grundsätzlich so zum Laserscanner und zur Fahrbahn ausgerichtet und eingestellt, dass sie ein Objektfeld mit einer Breite des Winkelbereiches in der Fotoentfernung e_{foto} scharf abbildet.

Um das angemessene Fahrzeug im Beweisfoto als das angemessene Fahrzeug sichtbar zu markieren, wird aus den Messwerten eine Markierung generiert. Dazu werden die Messwerte, die innerhalb dem zum Auslösezeitpunkt der Digitalkamera zeitnächsten Scan gewonnen werden, abgespeichert.
Vorteilhaft werden die Messwerte des Scans gespeichert, während dem auch die Fotoentfernung e_{foto} festgestellt wurde.

Die Messwerte eines Scans stellen eine Vielzahl von Messwertepaaren, aus einem momentanen Scanwinkel εₙ und einer Entfernung eₙ, dar, die jeweils einen Messpunkt Pₙ repräsentieren.
Bei einer konstanten Scanfrequenz und vorgegebenen Pulsfrequenz bewirkt die Fahrzeugoberfläche, genauer die Fahrzeugfront und eine Fahrzeugseite, wie sie vom Scanner "gesehen werden", entlang einer Linie in der Scanebene eine endliche Anzahl von Messwertepaaren, die ein winkelbildendes Streckenpaar beschreiben.

Alle Messwertepaare, die gemeinsam ein winkelbildendes Streckenpaar (nachfolgend Objektwinkel genannt) beschreiben, bilden eine Gruppe, die jeweils durch ein Fahrzeug generiert werden. Es ist dem Fachmann klar, dass die durch die Messwertepaare bestimmten Messpunkte Pₙ praktisch nur näherungsweise auf einer Geraden liegen, und durch mathematische Approximationsverfahren der Objektwinkel in die Gruppe von Messwertepaaren gelegt wird.
Gemäß der DE 10 2009 007 055.9 soll nun aus der Gruppe von Messwertepaaren eine Markierung generiert werden, die mit der fotografischen Aufnahme überlagert wird, sodass ein Bild entsteht, in dem auf dem angemessenen Fahrzeug eine Markierung entlang der Messpunkte über die Breite und/ oder Länge des abgebildeten Fahrzeuges bevorzugt in Höhe der Scanebene entsteht.

Da die Messwertepaare des Scans, der unmittelbar bei Ermittlung der Fotoentfernung e_{foto} durchgeführt wird, der Bildung der Markierung zugrunde gelegt werden, kann man sicher davon ausgehen, dass das Fahrzeug, dessen Position zum Zeitpunkt des Auslösens der Digitalkamera in der Fotoentfernung e_{foto} ist, auch tatsächlich das angemessene Fahrzeug ist.

Um diese Markierung zu generieren, wird die Gruppe von Messwertepaaren, die Messpunkte Pₙ am Fahrzeug in der horizontalen Scanebene repräsentieren, in eine Gruppe von Bildpunkten transformiert, die korrelierende Punkte in der Abbildung des perspektivisch aufgenommenen Fahrzeuges, das heißt in der Aufnahme darstellen.
Aus der Gruppe von Bildpunkten wird nun eine digitalisierte Markierung gebildet, die die Bildpunkte beinhaltet.

Die mit der Aufnahme gewonnenen, elektronisch erfassten Bilddaten des Fahrzeuges können als digitalisierte Aufnahme in einer Datei gemeinsam mit der digitalisierten Markierung abgespeichert werden, sodass bei Visualisierung der Datei die Markierung das angemessene Fahrzeug sichtbar überlagert.

Vorteilhafter ist es jedoch, die digitalisierte Aufnahme und die digitalisierte Markierung in getrennten, jedoch miteinander verknüpften Dateien abzuspeichern. Zur Visualisierung werden die Dateien überlagert, sodass auch hier das angemessene Fahrzeug von der Markierung überlagert sichtbar wird. Bei einer getrennten Speicherung bleibt die digitalisierte Abbildung des Fahrzeuges, insbesondere des Nummernschildes, unbeeinflusst und mit ihrer vollen Information erhalten.

Die Markierung überlagert dann nur temporär zur Betrachtung der Aufnahme an einem Bildschirm oder zum Ausdrucken eines Fotos die Aufnahme des Fahrzeuges.

Durch die Transformation der Gruppe von Messwertepaaren in eine Gruppe von Bildpunkten kann eine Markierung generiert werden, die in die Abbildung des Fahrzeuges eingeblendet genau die Messpunkte Pₙ überdeckt, die unmittelbar bei Auslösen der Digitalkamera angemessen wurden. Das heißt die Markierung entsteht auf dem abgebildeten Fahrzeug entlang der Auftreffpunkte.

Vorteilhaft überdeckt die Markierung alle diese Messpunkte Pₙ und erstreckt sich als Linie vollständig über die Länge und Breite der sichtbaren Seiten des abgebildeten Fahrzeuges.

Sie kann aber auch nur einen Teil der Messpunkte Pₙ überdecken und stellt dann vorteilhaft eine Linie dar, die sich nur über die sichtbare Seite erstreckt, auf der sich nicht das Kennzeichen befindet, um eine Beeinflussung der Abbildung des Kennzeichens sicher zu vermeiden.

Die Sicherheit dafür, dass das markierte Fahrzeug auch das angemessene Fahrzeug ist, ist dadurch gegeben, dass die zur Markierung des Fahrzeuges verwendeten Messdaten im Moment der Erstellung einer elektronischen Aufnahme des angemessenen Fahrzeuges durch das Fahrzeug selbst bewirkt werden.

Bei dem in der DE 10 2009 007 055.9 beschriebenen Verfahren wird stillschweigend unterstellt, dass die Korrelation zwischen dem Scannerkoordinatensystem und dem Kamerakoordinatensystem bekannt ist, um die Messdaten des Laserscannersystems genau den Bildpunkten in der Aufnahme der Digitalkamera zuordnen zu können, die eine Abbildung der Objektpunkte darstellen, die als Messpunkte (Auftreffpunkte) durch die Messdaten beschrieben sind.
Das heißt, eine aus den Messdaten generierte Markierung kann nur dann in die Abbildung korrekt transformiert werden, wenn die räumliche Beziehung zwischen den beiden Koordinatensystemen bekannt ist.

Die Herstellung einer solchen räumlichen Beziehung ist der Gegenstand des erfindungsgemäßen Verfahrens.

Üblicherweise werden ein Laserscanner und eine Digitalkamera, die gemeinsam in einer Vorrichtung aufeinander abgestimmt funktionieren sollen, während der Montage der Vorrichtung noch beim Hersteller zueinander justiert.

Dazu werden mit Hilfe eines stillstehenden Messkörpers die Achse des Laserscanners, um die der Laserstrahl um einen sich stetig ändernden Scanwinkel ausgelenkt wird, und die optische Achse der Digitalkamera zueinander so justiert, dass sie den Messkörper unter einem gleichen Blickwinkel "sehen". Ideal ist dies nur gegeben, wenn die beiden Achsen zusammenfallen, was allerdings praktisch nicht möglich ist. Die Achsen werden daher zueinander parallel ausgerichtet mit einem möglichst geringen, auf die Messentfernung, die durch den Fotopunkt bestimmt ist, vernachlässigbaren Achsabstand. Die Messwerte der einzelnen Messpunkte können dann in ein kartesisches Koordinatensystem umgerechnet und unter Einbeziehung der Abbildungscharakteristik der Digitalkamera, insbesondere der Brennweite des Kameraobjektives, in die zugehörigen Bildpunkte transformiert werden. Nachteilig ist, dass im Ergebnis der Justage der Laserscanner und die Digitalkamera zueinander stabilisiert werden müssen. Bei Vorrichtungen, bei denen der Laserscanner und die Digitalkamera am Einsatzort getrennt aufgestellt werden sollen, wie es insbesondere bei der Überwachung von mehreren Fahrbahnen von Vorteil ist, ist eine Justage vorab nicht möglich.

Im Unterschied zu dem aus der DE 10 2009 007 055.9 bekannten Verfahren, wo der Laserscanner ein Überwachungsbereich horizontal abscannt, kann der Scanner den Überwachungsbereich auch vertikal oder auch unter einem Neigungswinkel zwischen 0° und 90° abscannen, um z. B. das Fahrzeugprofil zu erfassen. Insbesondere im Falle eines vertikalen Abscannens wird deutlich, dass die achsgleiche Ausrichtung von Laserscannerachse und Kameraachse nicht in jedem Fall sinnvoll ist. In der Regel soll die Digitalkamera in einer Höhe über der Fahrbahn und zur Fahrtrichtung so ausgerichtet sein, dass der Fahrzeugführer frontal abgebildet wird.

Eine Justage vor Ort erweist sich jedoch, insbesondere wenn die Vorrichtung z. B. bei laufendem Verkehr am Straßenrand und die Installation des Laserscanners und der Digitalkamera nicht an gleicher Stelle erfolgt, z. B. wenn der Laserscanner seitlich des Straßenrandes installiert und die Digitalkamera an einer Brücke montiert wird, als äußerst aufwändig und unter Umständen auch als gefährlich.

Es ist die Aufgabe der Erfindung ein Verfahren zu finden, mit dem eine bekannte feste räumliche Beziehung zwischen einem Laserscanner und einer Digitalkamera einer Verkehrsüberwachungseinrichtung am Einsatzort hergestellt wird.

Das erfindungsgemäße Verfahren soll nachfolgend anhand eines Ausführungsbeispieles an den Zeichnungen näher erläutert werden. Hierzu zeigen:
- Fig. 1a: eine Messstruktur im Scannerkoordinatensystem
- Fig. 1b: die Messstruktur im transformierten Koordinatensystem
- Fig. 1c: die Messstruktur im Kamerakoordinatensystem
- Fig. 1d: die Messstruktur im Kamerakoordinatensystem nach einer ersten Verdrehung
- Fig. 1e: die Messstruktur im Kamerakoordinatensystem nach einer zweiten Verdrehung
- Fig. 2a und 2b: eine in eine Aufnahme eingeblendete Messstruktur in einer ersten Lage
- Fig. 3a und 3b: eine in eine Aufnahme eingeblendete Messstruktur in einer zweiten Lage
- Fig. 4a und 4b: eine in eine Aufnahme eingeblendete Messstruktur in einer dritten Lage

Zur Durchführung des Verfahrens werden ein Laserscanner mit einer Laserscannerachse, um die der Laserstrahl um einen sich stetig ändernden Scanwinkel ausgelenkt wird, und eine Digitalkamera mit einer optischen Achse, um die die Digitalkamera und damit ihre Bildebene, beliebig verdreht sein kann, so zueinander ausgerichtet, dass der Überwachungsbereich, bestimmt durch den Scanwinkelbereich, vom Objektfeld der Digitalkamera an einem vorgegebenen Fotopunkt vollständig überdeckt wird.

Der Laserscanner wird vorteilhaft neben der Fahrbahn aufgestellt, um den Überwachungsbereich in einer horizontalen Ebene abzuscannen oder oberhalb der Fahrbahn montiert, um eine vertikale Ebene abzuscannen. Darüber hinaus sind auch andere Anordnungen des Laserscanners möglich, z. B. um den Überwachungsbereich in einer schiefliegenden Ebene abzuscannen.
In der Messwerterfassung liegt der Unterschied darin, dass beim horizontalen Abscannen grundsätzlich mit einem Scan die Position des Fahrzeugs vollständig erfasst wird, während beim vertikalen Abscannen in Abhängigkeit von der Fahrzeuggeschwindigkeit eine Vielzahl von Scans durchgeführt werden müssen, um das Fahrzeug vollständig in seinem Volumenmodell zu erfassen.

Beim horizontalen Abscannen stellen die Messwerte, die durch Messpunkte in nur einer Ebene gebildet werden, idealisiert eine Linie in Form eines Winkels dar, der bei Erfassung des Fahrzeuges durch mehrere Scans seine Schenkelposition ändert. Der Winkel ist eine am Fahrzeug wiedererkennbare Messstruktur.

Beim Abscannen aus einer deutlich erhöhten Scannerposition beschreiben die Messwerte eine Fläche, die einer Projektion auf das Fahrzeug entspricht.
Die Umfangslinie dieser Fläche, stellt idealisiert bei vertikaler Scanrichtung ein Rechteck dar, was eine am Fahrzeug wiedererkennbare Messstruktur darstellt.

Wird beim Scannen in einer vertikalen Ebene die Laserscannerachse schräg auf die Fahrbahn gerichtet, so werden eine Seitenfläche und die Deckfläche und sogar die Frontfläche erfasst, wenn die vertikale Ebene nicht senkrecht zur Fahrbahnrichtung verläuft. Die Umfangslinien der durch die Messwerte beschriebenen Flächen stellen wiederum eine wiedererkennbare Messstruktur dar.

Solche Messstrukturen können auch aus den Messwerten mehrerer Laserscanner gewonnen werden, die z. B. ein Fahrzeug zum einen in einer horizontalen und zum anderen in einer vertikalen Scanebene erfassen.

Nachdem der Laserscanner und die Digitalkamera wie erläutert zueinander ausgerichtet sind, wird ein den Überwachungsbereich durchfahrendes Fahrzeug abgescannt. Der Laserstrahl wird vom Fahrzeug in seinen Auftreffpunkten (nachfolgend Messpunkte genannt) reflektiert, womit Messwerte generiert werden. Bei Erreichen des Fotopunktes durch das Fahrzeug wird eine Aufnahme ausgelöst.

Die Messwerte werden pro Scan in Abhängigkeit von der Pulsfrequenz und der Scangeschwindigkeit generiert. Sie werden durch eine Vielzahl von Messwertepaaren aus einer Entfernung eₙ und einem Winkelwert εₙ gebildet und beschreiben jeweils den Ort eines Messpunktes Pₙ (eₙ; εₙ) innerhalb eines Scannerkoordinatensystems 1.
Aus diesen Messwerten werden rechentechnisch die herausgefiltert, die gemeinsam eine am Fahrzeug wiedererkennbare Messstruktur bilden.

Zur einfachen Beschreibung eines vorteilhaften Ausführungsbeispieles soll von einer Laserscanneranordnung, wie sie in der DE 10 2009 007 055.9 beschrieben ist, ausgegangen werden.
Ein den Überwachungsbereich durchfahrendes Fahrzeug wird in einer horizontalen Ebene abgescannt, sodass als Messstruktur näherungsweise ein Winkel entsteht. Der Winkel ist gebildet durch eine Linie entlang der Fahrzeugfront und der vom Laserscanner "gesehenen" Fahrzeugseite in Höhe der Scanebene.

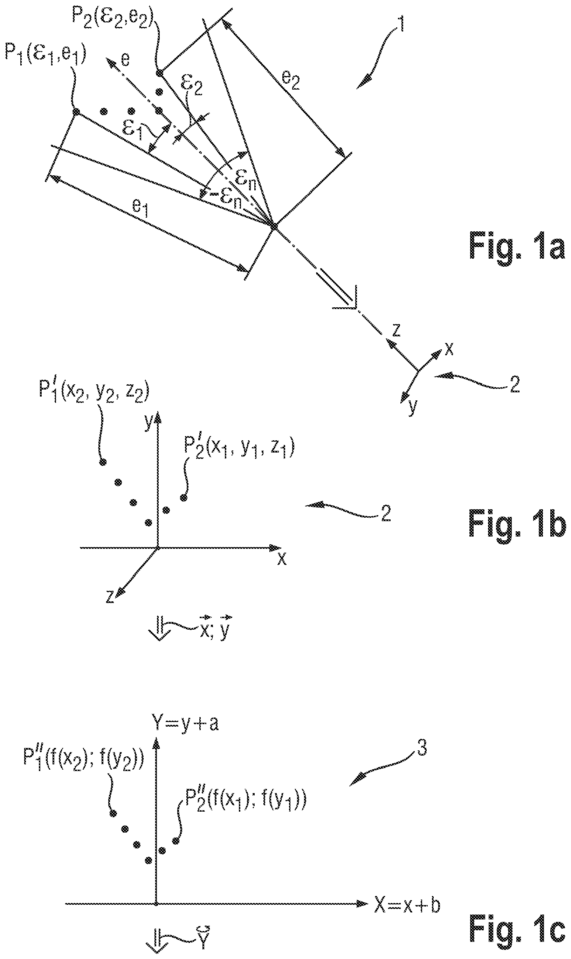

In Fig. 1a ist das Scannerkoordinatensystem 1, ein Polarkoordinatensystem, in dem beispielhaft fünf Messpunkte dargestellt sind, gezeigt.

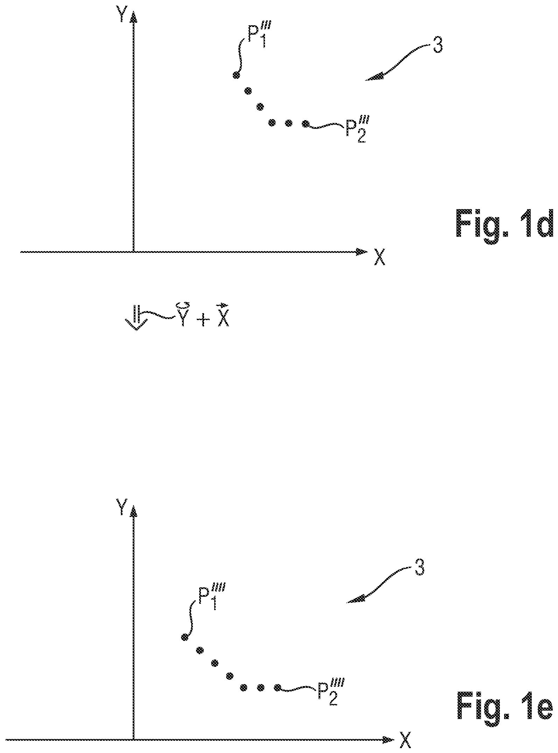

In einem nachfolgenden Schritt werden die Messwerte der durch Polarkoordinaten beschriebenen Messpunkte Pₙ der Messstruktur in kartesische Koordinaten eines ebenfalls dem Laserscanner zuordenbaren kartesischen Koordinatensystems (nachfolgend transformiertes Koordinatensystem 2 genannt) umgerechnet, wobei die sich ergebenden Werte für die z-Achse, die mit der Laserscannerachse zusammenfällt, zu Null gesetzt werden. Die Messwerte sind nun in einer Ebene dargestellt, siehe Fig. 1 b.
Das transformierte Koordinatensystem 2 hat den gleichen Koordinatenursprung wie das Scannerkoordinatensystem 1.

Um die auf das transformierte Koordinatensystem 2 bezogenen Messwerte in ein durch die Digitalkamera definiertes Kamerakoordinatensystem 3 zu transformieren, bedarf es grundsätzlich translatorischer Verschiebungen entlang der drei durch das transformierte Koordinatensystem 2 definierten Koordinatenachsen und rotatorischer Bewegungen um diese Koordinatenachsen sowie einer Umrechnung der Messwerte unter Einbeziehung der bekannten Abbildungscharakteristik der Digitalkamera, insbesondere der Brennweite.

Zur Umrechnung der Messwerte muss, sofern das Objektiv der Digitalkamera verzeichnungsfrei ist bzw. die Verzeichnung vernachlässigbar ist, lediglich der Maßstab der Achsen an den Abbildungsmaßstab der Digitalkamera angepasst werden.

Die Beträge zur translatorischen Bewegung werden wenigstens grob vorgegeben.
Sie sind entweder bekannt, da sich der Laserscanner und die Digitalkamera in einem gemeinsamen Gehäuse befinden oder sie werden durch Vermessung der Abstände des Laserscanners zur Digitalkamera entlang der Koordinatenachsen der transformierten Digitalkamera gewonnen. Darüber hinaus kann die translatorische Lage auch durch mathematische Ausgleichsverfahren gewonnen werden, indem automatisiert Scanbilder mit den zugehörigen Kamerabildern algorithmisch abgeglichen werden.

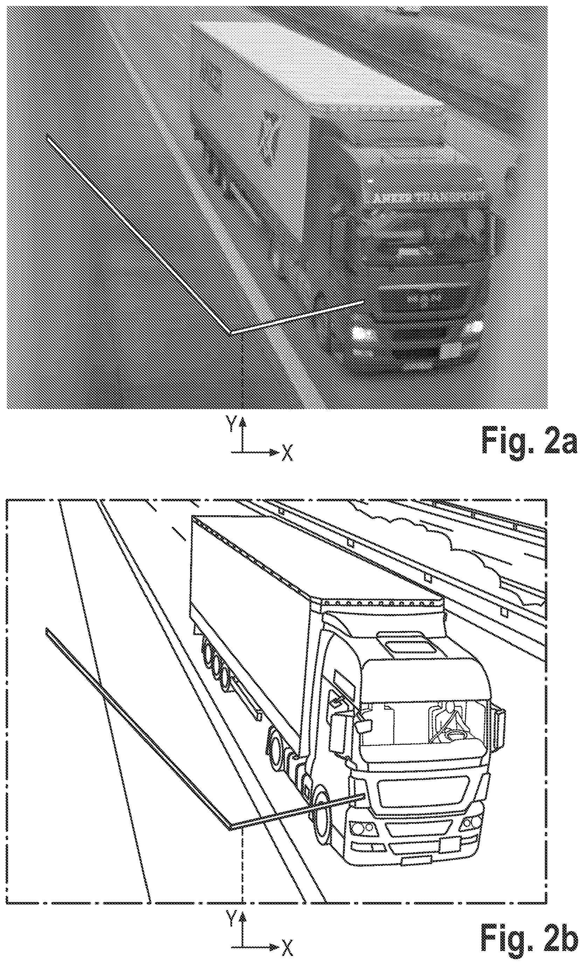

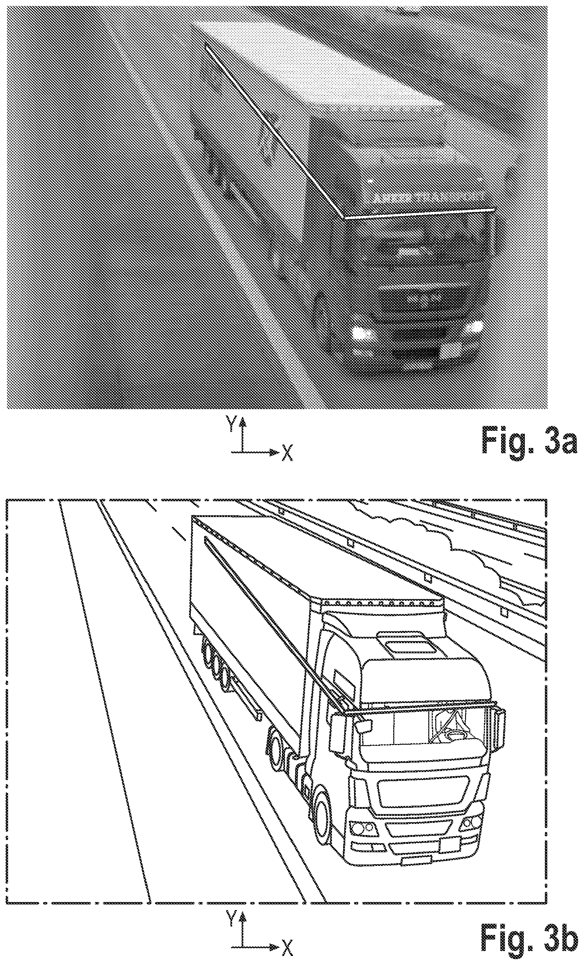

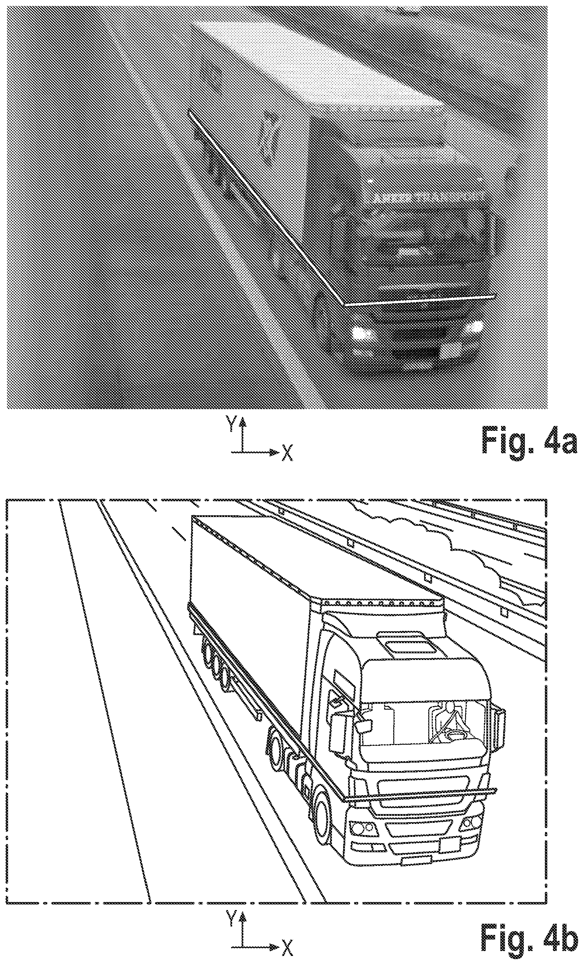

Indem die Messwerte der Messstruktur rechentechnisch translatorisch verschoben werden, werden sie in das Kamerakoordinatensystem 3 gelegt (Fig. 1c). Da die auf das transformierte Koordinatensystem 2 bezogenen Messwerte nur translatorisch in das Kamerakoordinatensystem 3 transformiert werden und das auch nur grob, überlagert die Messstruktur nicht die Abbildung des Fahrzeuges entlang der die Messstruktur bestimmenden Messpunkte am Fahrzeug (Fig. 2a und 2b).
Um die Messstruktur genau mit den Messpunkten am Fahrzeug zu überlagern, bedarf es hier beispielhaft noch einer geringen translatorischen Verschiebung in Richtung der X- Achse und einer rotatorischen Bewegung um die Y-Achse, um zu einem Zwischenstadium zu gelangen, wie in Fig. 3a und 3b gezeigt, sowie einer rotatorischen Bewegung um die X-Achse und geringen translatorischen Verschiebung in Richtung der Y-Achse, um zum Endstadium, wie in Fig. 4a und 4b dargestellt, zu gelangen.

Diese nur noch geringfügigen translatorischen Verschiebungen sind unter Umständen notwendig aufgrund ungenauer Vermessungen oder zwischenzeitlicher, z. B. transportbedingter Veränderung der Relativlage zwischen dem Laserscanner und der Digitalkamera. Sie werden ebenso wie die rotatorischen Bewegungen nicht durch eine Änderung der Relativlage zwischen Laserscanner und Digitalkamera vollzogen, sondern nur rechentechnisch. Beispielsweise können die Rotationswinkel so bestimmt werden, dass ein Benutzer in einem iterativen Prozess die Rotationswinkel so ändert, dass das Abbild der ermittelten Schenkel, d. h. die Messstruktur, in korrekter Lage auf dem Fahrzeugbild überblendet wird (Fig. 4a).

In der Praxis erfolgen sowohl die translatorischen Verschiebungen als auch die rotatorischen Bewegungen vorzugsweise interaktiv. Hierzu sind ein

Eingabegerät, z. B. Joystick, Maus, Tastatur o. ä., und ein Ausgabegerät wie z. B. ein Bildschirm oder ein kombiniertes Ein- und Ausgabegerät, z. B. ein Gerät mit Touchscreen, zumindest temporär mit der Verkehrsüberwachungseinrichtung verbunden.
Nachdem mindestens ein Foto mit der Digitalkamera aufgezeichnet wurde, wird aus den passenden Messwerten eine Messstruktur ermittelt und dem Foto der Digitalkamera überlagert und auf dem Ausgabegerät als Markierung angezeigt. Um die Markierung genau mit dem Fahrzeug auf dem Foto zu überlagern, wird über das Eingabegerät die Markierung solange verschoben und/oder gedreht, bis sie das Fahrzeug ideal überlagert. Dieser Vorgang wird vorzugsweise solange wiederholt, bis die Markierung ohne weitere Korrektur das abgebildete Fahrzeug genau überlagert.

Das vorgeschlagene Verfahren dient für eine nachfolgende Verkehrsüberwachung zum einen zur Sicherstellung, dass das vom Laserscanner erfasste Fahrzeug auch das abgebildete Fahrzeug ist und zum anderen kann durch die Kenntlichmachung der Messstruktur mittels einer Markierung, die in die elektronische Abbildung des Fahrzeuges eingeblendet wird, das erfasste Fahrzeug markiert werden. Letzteres ist insbesondere von Vorteil, wenn die Verkehrsüberwachung mehrere Fahrspuren einer Fahrbahn umfasst.

Das erfindungsgemäße Verfahren ist insbesondere vorteilhaft, dass abgesehen von der anfänglichen groben Ausrichtung zwischen Laserscanner und Digitalkamera die Herstellung einer bekannten räumlichen Beziehung zwischen einem durch den Laserscanner bestimmten Scannerkoordinatensystem 1 und einem durch die Digitalkamera bestimmten Kamerakoordinatensystem 3 nicht durch eine relative Lageänderung zwischen dem Laserscanner und der Digitalkamera erfolgt, sondern ausschließlich rechentechnisch, womit die Vorbereitungen zur Verkehrsüberwachung vor Ort schneller und vor allem auch gefahrloser erfolgen können.

Das vorgeschlagene Verfahren der Ausrichtung zwischen einem Koordinatensystem eines Messgerätes und einem Kamerakoordinatensystem 3 kann sinngemäß für jede Art von Messsystemen eingesetzt werden, bei denen das Messgerät eine Positionsangabe des Fahrzeuges liefert.

## Patentansprüche

1. Verfahren zur Herstellung einer festen räumlichen Beziehung zwischen einem Laserscanner und einer Digitalkamera zur Verkehrsüberwachung, folgende Verfahrensschritte umfassend:
- Ausrichten eines Laserscanners mit einer Laserscannerachse und einer Digitalkamera mit einer optischen Achse zueinander, sodass ein Überwachungsbereich, bestimmt durch den Scanwinkelbereich des Laserscanners, vom Objektfeld der Digitalkamera an einem vorgegebenen Fotopunkt vollständig überdeckt wird,
- Abscannen eines den Überwachungsbereich durchfahrenden Fahrzeuges zur Gewinnung von Messpunkten zugeordneten Messwerten, bezogen auf ein durch den Laserscanner definiertes Scannerkoordinatensystem 1 mit Polarkoordinaten,
- Auslösen einer Aufnahme vom abgescannten Fahrzeug mittels der Digitalkamera bei dessen Erreichen des Fotopunktes,
- Herausfiltern der Messwerte, die gemeinsam eine am Fahrzeug wiedererkennbare Messstruktur bilden, wobei die wiedererkennbare Messstruktur bei einem horizontalen Abscannen des Überwachungsbereichs durch einen neben der Fahrbahn aufgestellten Laserscanner eine durch Messwerte dargestellte idealisierte Linie in Form eines Winkels ist, deren Messwerte durch Messpunkte in nur einer Ebene gebildet sind oder die wiedererkennbare Messstruktur eine Umfangslinie einer durch Messwerte beschriebenen Fläche ist, die bei einem vertikalen Abscannen des Fahrzeugs durch einen oberhalb der Fahrbahn montierten Laserscanner erhalten wird und idealisiert ein Rechteck darstellt, und wobei die Fläche einer Projektion auf das Fahrzeug entspricht,
- Transformieren der auf das Scannerkoordinatensystem 1 bezogenen Messwerte der Messstruktur in ein transformiertes Koordinatensystem 2 mit gleichem Koordinatenursprung und kartesischen Koordinaten,
- Transformieren der auf das transformierte Koordinatensystem 2 bezogenen Messwerte der Messstruktur in ein durch die Digitalkamera definiertes Kamerakoordinatensystem 3, womit die Messstruktur mit den abgebildeten Messpunkten des abgebildeten Fahrzeuges zur Überlagerung kommen.

2. Verfahren nach Anspruch 1, wobei die Transformation der Messwerte durch translatorische Verschiebungen entlang der drei durch das transformierte Koordinatensystem (2) definierten Koordinatenachsen und rotatorische Bewegungen um diese Koordinatenachsen sowie eine Umrechnung der Messwerte unter Einbeziehung der bekannten Abbildungscharakteristik der Digitalkamera erfolgt.

3. Verfahren nach Anspruch 2, wobei für die translatorische Verschiebung bekannte Abstandswerte zwischen dem Laserscanner und der Digitalkamera verwendet werden.

4. Verfahren nach Anspruch 2, wobei für die translatorische Verschiebung die Abstände zwischen dem Laserscanner und der Digitalkamera ausgemessen werden.

5. Verfahren nach Anspruch 2, wobei für die translatorische Verschiebung die Abstände zwischen dem Laserscanner und der Digitalkamera durch mathematische Ausgleichsrechnungen durch Vergleich der Daten des Laserscanners zu den aufgenommenen Digitaldaten der Digitalkamera geschätzt werden.

6. Verfahren nach Anspruch 1, wobei die Messstruktur als eine Markierung in die elektronische Abbildung des Fahrzeuges eingeblendet wird und die Rotationswinkel für die rotatorische Bewegung so bestimmt werden, dass ein Benutzer in einem iterativen Prozess die Rotationswinkel so ändert, dass die Markierung in korrekter Lage auf dem Fahrzeugabbild überblendet wird.

7. Verfahren nach Anspruch 1, wobei die Messstruktur als eine Markierung in die elektronische Abbildung des Fahrzeuges eingeblendet wird und die Rotationswinkel für die rotatorische Bewegung so bestimmt werden, dass durch mathematische Ausgleichsrechungen zwischen den Scannerdaten und der aus den Bilddaten extrahierten Geometrieinformation die Rotationswinkel so bestimmt werden, dass die Markierung in korrekter Lage auf dem Fahrzeugabbild überblendet wird.

## Claims

1. Method for producing a fixed spatial relationship between a laser scanner and a digital camera for traffic monitoring, comprising the following method steps:
- a laser scanner with a laser scanner axis and a digital camera with an optical axis are aligned relative to one another in such a way that a monitoring area defined by the scanning angle area of the laser scanner is completely covered by the object field of the digital camera at a given photo point,
- a vehicle driving through the monitoring area is scanned to obtain measured values associated with measurement points in relation to a scanner coordinate system 1 defined by the laser scanner and having polar coordinates,
- a recording of the scanned vehicle is triggered by means of the digital camera when the vehicle reaches the photo point,
- the measured values which together form an identifiable measurement structure on the vehicle are filtered out, wherein the identifiable measurement structure is an idealised line in the shape of an angle which is presented by measured values and whose measured values are formed by measurement points in only one plane when the monitoring area is horizontally scanned by a laser scanner arranged next to the roadway, or the identifiable measurement structure is a circumferential line of a surface described by measured values, which circumferential line is obtained when the vehicle is vertically scanned by a laser scanner mounted above the roadway and which ideally presents a rectangle, and wherein the surface corresponds to a projection on the vehicle,
- the measured values of the measurement structure which relate to the scanner coordinate system 1 are transformed into a transformed coordinate system 2 with the same coordinate origin and Cartesian coordinates,
- the measured values of the measurement structure which relate to the transformed coordinate system 2 are transformed into a camera coordinate system 3 defined by the digital camera so that the measurement structure is superimposed on the imaged measurement points of the imaged vehicle.

2. Method according to claim 1, wherein the transformation of the measured values is carried out by translational displacements along the three coordinate axes defined by the transformed coordinate system (2) and rotational movements around these coordinate axes, and by converting the measured values taking into account the known imaging characteristic of the digital camera.

3. Method according to claim 2, wherein known distance values between the laser scanner and the digital camera are used for the translational displacement.

4. Method according to claim 2, wherein the distances between the laser scanner and the digital camera are measured for the translational displacement.

5. Method according to claim 2, wherein the distances between the laser scanner and the digital camera are estimated by mathematical curve fitting by comparing the data of the laser scanner to the recorded digital data of the digital camera for the translational displacement.

6. Method according to claim 1, wherein the measurement structure is superimposed on the electronic image of the vehicle as a marker, and the rotational angles for the rotational movement are determined in such a way that a user changes the rotational angles by an iterative process in such a way that the marker is superimposed on the vehicle image in the correct position.

7. Method according to claim 1, wherein the measurement structure is superimposed on the electronic image of the vehicle as a marker, and the rotational angles for the rotational movement are determined in such a way that the rotational angles are determined by mathematical curve fitting between the scanner data and the geometry information extracted from the image data in such a way that the marker is superimposed on the vehicle image in the correct position.

## Revendications

1. Procédé de production d'une relation spatiale fixe entre un scanner laser et un appareil photo numérique pour la surveillance du trafic, comprenant les étapes de procédé suivantes:
- un scanner laser avec un axe de scanner laser et un appareil photo numérique avec un axe optique sont alignés l'un par rapport à l'autre de telle façon qu'une zone de surveillance définie par la zone de l'angle de balayage du scanner laser est complètement couverte par le champ d'objet de l'appareil photo numérique à un point de photo prédéterminé,
- un véhicule passant par la zone de surveillance est balayé pour obtenir des valeurs de mesure associées avec des points de mesure par rapport à un système de coordonnées de scanner 1 défini par le scanner laser et ayant des coordonnées polaires,
- un enregistrement du véhicule balayé est déclenché au moyen de l'appareil photo numérique quand le véhicule atteint le point de photo,
- les valeurs de mesure qui forment conjointement une structure de mesure identifiable sur le véhicule sont filtrées, la structure de mesure identifiable étant une ligne idéalisée sous la forme d'un angle qui est présentée par des valeurs de mesure et dont les valeurs de mesure sont formées par des points de mesure dans un seul plan quand la zone de surveillance est balayée horizontalement par un scanner laser disposé à côté de la chaussée, ou la structure de mesure identifiable étant une ligne circonférentielle d'une surface décrite par des valeurs de mesure qui est obtenue quand le véhicule est balayé verticalement par un scanner laser monté au-dessus de la chaussée et qui présente idéalement un rectangle, et la surface correspondant à une projection sur le véhicule,
- les valeurs de mesure de la structure de mesure liées au système de coordonnées de scanner 1 sont transformées en un système de coordonnées transformé 2 avec la même origine des coordonnées et des coordonnées cartésiennes,
- les valeurs de mesure de la structure de mesure liées au système de coordonnées transformé 2 sont transformées en un système de coordonnées de caméra 3 défini par l'appareil photo numérique de façon que la structure de mesure soit superposée sur les points de mesure imagés du véhicule imagé.

2. Procédé selon la revendication 1, dans lequel la transformation des valeurs de mesure est effectuée par des déplacements de translation le long des trois axes de coordonnées définis par le système de coordonnées transformé (2) et par des mouvements de rotation autour de ces axes de coordonnées, et par conversion des valeurs de mesure en tenant compte de la caractéristique d'imagerie connue de l'appareil photo numérique.

3. Procédé selon la revendication 2, dans lequel des valeurs de distance connues entre le scanner laser et l'appareil photo numérique sont utilisées pour le déplacement de translation.

4. Procédé selon la revendication 2, dans lequel les distances entre le scanner laser et l'appareil photo numérique sont mesurées pour le déplacement de translation.

5. Procédé selon la revendication 2, dans lequel les distances entre le scanner laser et l'appareil photo numérique sont estimées par ajustement de courbe mathématique en comparant les données du scanner laser aux données numériques enregistrées de l'appareil photo numérique pour le déplacement de translation.

6. Procédé selon la revendication 1, dans lequel la structure de mesure est superposée sur l'image électronique du véhicule en tant que marquage et les angles de rotation pour le mouvement de rotation sont déterminés de telle façon qu'un utilisateur change les angles de rotation par un processus itératif de telle façon que le marquage est superposé sur l'image de véhicule dans la position correcte.

7. Procédé selon la revendication 1, dans lequel la structure de mesure est superposée sur l'image électronique du véhicule en tant que marquage et les angles de rotation pour le mouvement de rotation sont déterminés de telle façon que les angles de rotation sont déterminés par ajustement de courbe mathématique entre les données du scanner et l'information géométrique extraite des données d'image de telle façon que le marquage est superposé sur l'image de véhicule dans la position correcte.
